(19) Europäisches Patentamt
European Patent Office
Office européen des brevets

(11) **EP 4 468 261 A1**

(12) **EUROPEAN PATENT APPLICATION**

(43) Date of publication:
**27.11.2024 Bulletin 2024/48**

(21) Application number: **23175102.5**

(22) Date of filing: **24.05.2023**

(51) International Patent Classification (IPC):
**G06V 40/12** *(2022.01)*     **G06V 10/24** *(2022.01)*
**G06V 40/13** *(2022.01)*

(52) Cooperative Patent Classification (CPC):
**G06V 40/1347; G06V 10/242; G06V 40/1312**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **AIT Austrian Institute of Technology
GmbH
1210 Wien (AT)**

(72) Inventors:
• **Ruzicka, Laurenz
1150 Wien (AT)**
• **Strobl, Bernhard
1010 Wien (AT)**
• **Kohn, Bernhard
2443 Deutsch Brodersdorf (AT)**
• **Voko, Erich
2232 Deutsch Wagram (AT)**

(74) Representative: **Wildhack & Jellinek
Patentanwälte GmbH
Landstraßer Hauptstraße 50
1030 Wien (AT)**

(54) **METHOD FOR FINGER POSE CORRECTION IN 2D FINGERPRINT IMAGES**

(57)     The invention relates to a method for finger pose correction in 2D fingerprint images (A) captured in an unconstrained capturing environment with unknown finger pose, in particular captured by a contactless fingerprint sensor system (50),
comprising the following steps:
- providing at least one, in particular grayscale, 2D fingerprint image (A), wherein said 2D fingerprint image (A) contains the image of at least one finger (F),
- detecting the image of the fingertip of the at least one finger (F) in the 2D fingerprint image (A),
- extracting the detected fingertip from the 2D fingerprint image (A) in the form of a 2D fingertip image (B),
- segmenting the extracted 2D fingertip image (B) in order to separate the fingertip from the background, wherein the finger contour of the fingertip is provided by the segmentation,
- localizing the fingerprint core of the fingertip in the extracted 2D fingertip image (B) and horizontally rotating the segmented 2D fingertip image (B') and the localized fingerprint core position based on the detected finger contour and/or
horizontally rotating the segmented 2D fingertip image (B') based on the detected finger contour and localizing the fingerprint core of the fingertip in the horizontally rotated 2D fingertip image (B*),
- determining the offset of the fingerprint core of the fingertip in the horizontally rotated 2D fingertip image (B*) relative to the finger contour provided by the segmentation,
- determining the rotation angle $\alpha$ for lateral rotation of the horizontally rotated 2D fingertip image (B*) based on the determined offset of the fingerprint core and a predefined 3D finger shape,
- modelling the fingertip in the horizontally rotated 2D fingertip image (B*) based on the predefined 3D finger shape and the width of the detected finger contour and applying the determined rotation angle $\alpha$ for lateral rotation correction in order to receive a finger pose-corrected 2D fingertip image (C).

Fig. 2

**EP 4 468 261 A1**

## Description

The invention relates to a method for finger pose correction in 2D fingerprint images captured in an unconstrained capturing environment with unknown finger pose according to claim 1, an image processing unit according to claim 10, a fingerprint sensor arrangement according to claim 12 and a computer-readable storage medium according to claim 14.

Fingerprints have been a reliable means of identification and verification for over a century. They are unique to each individual and can provide a highly accurate and reliable means of identification. Contactless fingerprints belong to the field of biometrics, which is a branch of computer science that deals with the measurement and analysis of biological data. Biometrics involves the use of various physical and behavioral characteristics, such as fingerprints, facial recognition, iris scans, voice recognition, and gait analysis, to identify individuals and verify their identity. More specifically, contactless fingerprint technology is a form of biometric authentication that uses sensors to capture the unique patterns and ridges on a person's fingertips without the need for physical contact. This technology has become increasingly popular in recent years due to its convenience, speed, and hygiene, and is used in a wide range of applications, including security systems, access control, and mobile devices.

With the advancement of technology, contactless fingerprint sensors have emerged as a more hygienic and convenient means of collecting fingerprint data. EP 3663976 B1 and EP 3663981 A1 disclose methods and systems for detecting fingerprints using mobile, portable fingerprint recognition arrangements.

However, for security purposes, it is important that the data collected by these contactless sensors are interoperable with the large datasets of contact-based fingerprints that exist in the possession of law enforcement and security agencies. These datasets have been collected over many years and are an essential tool for police and security agencies in identifying criminals and verifying identities.

A lack of interoperability can affect the accuracy of template comparison and result in higher false rejection or false positive rates. Contactless fingerprint sensors capture images in an unconstrained capturing environment with unknown finger pose and thus produce images with different characteristics than contact-based ones, which can lead to lower template comparison scores and higher false rejection rates. Additionally, contactless fingerprint sensors are affected by various external factors such as lighting conditions and viewing angles, which can further reduce the quality of the collected images and negatively impact template comparison accuracy. Traditional image enhancement techniques for contactless fingerprint sensors, such as denoising and contrast adjustment alone, are therefore not sufficient to produce images with matching features similar to those of contact-based fingerprints.

For this reason, one objective of the invention is to provide a method for correcting images captured by contactless fingerprint sensor systems, captured in an unconstrained capturing environment and with unknown finger pose, in order to ensure accurate and reliable comparison with contact-based fingerprint images.

The invention solves this problem with a method for finger pose correction in 2D fingerprint images captured in an unconstrained capturing environment with unknown finger pose according to claim 1. The method according to the invention comprises the following steps:

- providing at least one, in particular grayscale, 2D fingerprint image, wherein said 2D fingerprint image contains the image of at least one finger,
- detecting the image of the fingertip of the at least one finger in the 2D fingerprint image,
- extracting the detected image of the fingertip from the 2D fingerprint image in the form of a 2D fingertip image,
- segmenting the extracted 2D fingertip image in order to separate the fingertip from the background, wherein the finger contour of the fingertip is provided by the segmentation,
- localizing the fingerprint core of the fingertip in the extracted 2D fingertip image and horizontally rotating the segmented 2D fingertip image and the localized fingerprint core position based on the detected finger contour and/or horizontally rotating the segmented 2D fingertip image based on the detected finger contour and localizing the fingerprint core of the fingertip in the horizontally rotated 2D fingertip image,
- determining the offset of the fingerprint core of the fingertip in the horizontally rotated 2D fingertip image relative to the finger contour provided by the segmentation,
- determining the rotation angle $\alpha$ for lateral rotation of the horizontally rotated 2D fingertip image based on the determined offset of the fingerprint core and a predefined 3D finger shape, in particular a predefined 3D finger shape model, which is preferably adapted to the width of the detected finger contour,
- modelling the fingertip in the horizontally rotated 2D fingertip image based on the predefined 3D finger shape, in particular the predefined 3D finger shape model, and the width of the detected finger contour and applying the determined rotation angle $\alpha$ for lateral rotation correction in order to receive a finger pose-corrected 2D fingertip image.

In the following, the term "finger pose" means the rotation and position of the finger in space, as seen by an image recording unit such as a camera. In the following, an "unconstrained capturing environment" means that the presented target, i.e. the hand, can move freely in all three dimensions inside the capturing region of an image recording unit.

In the following, the term "fingerprint core" means the innermost turning point where the fingerprint ridges form a loop. In the following, a "predefined 3D finger shape, in particular a predefined 3D finger shape model, which is preferably adapted to the width of the detected finger contour" means a 3D mockup model of a fingertip, preferably one that can be parameterized and adapted to the width of the detected finger contour.

The method according to the invention provides an advantageous approach for correcting the horizontal and lateral rotation of the entire fingertip using only a single image. The approach according to the invention eliminates negative effects caused by the unconstrained capturing environment of contactless fingerprint sensor systems created by the unknown finger pose as well as external factors such as viewing angles. In contrast to other existing pose correction frameworks, a method according to the invention transforms not only the output features, i.e. the minutiae, but also applies both horizontal and lateral corrections to the 2D segmented image of the fingertip.

The result of the method according to the invention is an aligned, finger pose-corrected, 2D fingertip image where the fingerprint core sits in the center. The method according to the invention makes an accurate and reliable comparison between contactless fingerprints and contact-based ones possible and thus significantly improves the interoperability of contact-based and contactless fingerprint sensors. This 2D image of the fingertip resulting from the method according to the invention may further be used by following processing steps to improve template comparison features, which significantly improves comparison of fingerprints from different sources, i.e. captured with different devices and techniques. Another advantage of the method according to the invention is thus its ability to concatenate additional enhancements.

In contrast to existing pose correction methods, which either neglect horizontal correction, require multiple cameras, or lack the ability to incorporate further enhancement steps, the method according to the invention provides a more efficient and effective solution to the problem of sensor interoperability and comparison of fingerprints from different sources, i.e. captured with different devices and techniques.

Additionally, with a method according to the invention only one camera is sufficient to estimate the finger shape. The transformation of the whole 2D fingerprint image or parts thereof, i.e. 2D fingertip images, allows to improve the recording quality and provides the possibility to add further, future improvements and method steps directly transforming the 2D fingerprint image or parts thereof, which is a major improvement over existing technologies.

In an advantageous embodiment the invention may further be improved in that for segmenting the extracted 2D fingertip image a neural network, in particular a neural network of U-Net architecture, is used. With this embodiment of the invention it is advantageously possible to identify the regions of interest, i.e. the fingers and/or fingertips, in the image especially accurately.

To ensure accurate horizontal rotation of the image, in a preferred embodiment the method according to the invention may be improved in that for horizontally rotating the segmented 2D fingertip image

- the slope of the center line of the detected finger contour is determined by fitting a linear function over the midpoints between a number of points on the finger contour of the fingertip located at the same y-axis coordinate, in particular at the same height, in particular at the same y-axis coordinate of a Cartesian coordinate system with its origin in the lower left corner of the segmented 2D fingertip image, in the segmented 2D fingertip image and
- the segmented 2D fingertip image is rotated based on the determined slope of the center line in order to ensure that the center line of the image of the fingertip is vertical in said segmented 2D fingertip image.

This method for horizontal rotation reduces the effect of outliers in the detected finger contour provided by the segmentation and/or a contour detection algorithm and thus allows for a more accurate rotation of the image, improving finger alignment in comparison to existing methods.

In order to accurately localize the fingerprint core of the finger in the image, the method according to the invention may further be improved in that the fingerprint core of the finger in the horizontally rotated 2D fingertip image is carried out

- based on the ridges and valleys, in particular the orientation of the ridges, of the fingertip and/or
- by a neural network, in particular a neural network of U-Net architecture.

The use of a neural network, in particular a neural network of U-Net architecture, is especially advantageous for directly localizing the fingerprint core of the finger in the fingertip image without having to identify any other structures such as ridges or valleys in the image beforehand. Apart from that, using a neural network, in particular a neural network of U-Net architecture, is especially suited for images with low depth of field, where some parts of the image may not be in sharp focus.

In an advantageous embodiment the invention may further be improved in that the predefined finger shape is an ellipsoid with an elliptic cross-section. The assumption of an ellipsoidal shape of the finger and/or fingertip is advantageous as it closely fits the actual shape of the fingertip.

In an advantageous embodiment the invention may further be improved in that for determining the rotation angle for lateral rotation

- an elliptic finger cross-section is assumed and the offset of the fingerprint core of the finger from the center of the horizontally rotated 2D fingertip image is determined,
- the distance $P_l'P_c'$ from the fingerprint core to the left edge of the finger and the distance $P_c'P_r'$ from the fingerprint core to the right edge of the finger in the horizontally rotated 2D fingerprint image are calculated and
- the rotation angle $\alpha$ is determined based on the following equations

$$\eta = arctan\left(\frac{b \cdot \sin \alpha}{a \cdot \cos \alpha}\right) \qquad (I)$$

$$R := \frac{\overline{P_l'P_c'}}{\overline{P_c'P_r'}} = \frac{1 + \sin(\eta)}{1 - \sin(\eta)} \qquad (II)$$

wherein a is the major axis of the elliptic finger cross section, b is the minor axis of the elliptic finger cross section.

This method advantageously allows the calculation of an estimated rotation angle based on the offset of the fingerprint core position.

In an advantageous embodiment the invention may further be improved in that the major-to-minor axis ratio a/b of the elliptic cross-section is 1.2. This choice of the major-to-minor axis ration is especially advantageous in the context of fingerprint correction as it adequately represents the actual shape of the fingertip.

In order to be able to rotate the finger image and/or the fingertip image to the correct orientation while taking into account the finger's estimated 3D shape, in an advantageous embodiment the method according to the invention may be improved in that for modelling the fingertip in the horizontally rotated 2D fingertip image the estimated 3D shape of the finger is taken into account by

- subdividing the image of the fingertip in the horizontally rotated 2D fingertip image into a number of slices parallel to the x-axis of a Cartesian coordinate system with its origin in the lower left corner of the horizontally rotated 2D fingertip image,

    - wherein the distance between the outermost pixels of the horizontally rotated fingertip contour on the x-axis of the Cartesian coordinate system defines the width $w_s$ of each slice, and
    - in particular wherein the number of pixels on the y-axis of the Cartesian coordinate system is proportional to and/or defines the number of slices,

- determining the parametrization of an elliptic cross-section for each slice based on the major-to-minor axis ratio a/b of the predefined 3D finger shape model and the width $w_s$ of said slice,
- determining for each parameterized elliptic cross-section the width of a corresponding laterally rotated elliptic cross-section based on the width of said parameterized elliptic cross-section and the rotation angle $\alpha$, and
- determining for each pixel in a given slice a corresponding laterally rotated pixel position based on its corresponding position in the predefined 3D finger shape model and the rotation angle $\alpha$.

In the following, the term "parametrization" means the parameters required to mathematically describe the object.

Using this approach, the width of the elliptic cross-section for each slice of the fingertip in the model is determined using the measured contour width for rotation of the fingertip image to the correct orientation.

In an advantageous embodiment the invention may further be improved in that the finger pose-corrected 2D fingertip image is unwarped using a circular, elliptic, and/or bidirectional unwarping method. Unlike contact-based fingerprint sensors, where the finger is in direct contact with the sensor surface, contactless sensors capture the fingerprint image without physical contact. As a result, contactless images can be distorted due to the curvature of the fingertip. Unwarping the finger pose-corrected 2D fingertip image may therefore be beneficial to correct for such distortion and to align the fingerprint image to a standard reference frame. Using this approach therefore makes template comparison with contact-based fingerprints even more accurate and reliable.

A further aspect of the invention is to provide an image processing unit for carrying out a method according to the invention. This problem is solved with an image processing unit for finger pose correction in 2D fingerprint images captured in an unconstrained capturing environment with unknown finger pose, in particular captured by a contactless fingerprint sensor system according to claim 10

- wherein the image processing unit is configured to receive at least one, in particular grayscale, 2D fingerprint image, in particular from a contactless fingerprint sensor system and/or an image recording unit, wherein said 2D fingerprint image contains the image of at least one finger,
- wherein in particular the image processing unit is connectable with the contactless fingerprint sensor system, in particular with an image recording unit of the contactless fingerprint sensor system, and
- wherein the image processing unit is programmed to

  ○ detect the image of the fingertip of the at least one finger in the 2D fingerprint image,
  ○ extract the detected image of the fingertip from the 2D fingerprint image in the form of a 2D fingertip image,
  ○ segment the extracted 2D fingertip image in order to separate the fingertip from the background and to provide the finger contour of the fingertip in said extracted 2D fingertip image,
  ○ localize the fingerprint core of the fingertip in the extracted 2D fingertip image and horizontally rotate the segmented 2D fingertip image and the localized fingerprint core position based on the detected finger contour and/or horizontally rotate the segmented 2D fingertip image based on the detected finger contour and localize the fingerprint core of the fingertip in the horizontally rotated 2D fingertip image,
  ○ determine the offset of the fingerprint core of the fingertip in the horizontally rotated 2D fingertip image relative to the finger contour provided by the segmentation,
  ○ determine the rotation angle $\alpha$ for lateral rotation of the horizontally rotated 2D fingertip image based on the determined offset of the fingerprint core and a predefined 3D finger shape, and
  ○ model the fingertip in the horizontally rotated 2D fingertip image based on the predefined 3D finger shape and the width of the detected finger contour and apply the determined rotation angle $\alpha$ for lateral rotation correction, such providing a finger pose-corrected 2D fingertip image.

An image processing unit according to the invention provides all advantageous effects described above. In particular, an image processing unit according to the invention provides the possibility to effectively and reliably correct fingerprint images captured with unknown finger pose and in unconstrained capturing environments, in particular correcting the horizontal and lateral rotation of the entire fingertip, as well as varying lighting conditions and viewing angels providing an aligned finger pose-corrected 2D fingertip image where the fingerprint core sits in the center. An image processing unit according to the invention allows accurate and reliable comparison between contactless fingerprints and contact-based ones and thus significantly improves the interoperability of contact-based and contactless fingerprint sensors.

The image processing unit according to the invention may further be improved in that the image processing unit is programmed to carry out a method according to the invention.

The invention further solves the above-mentioned problem with a fingerprint sensor arrangement according to claim 12 designed in particular as a mobile portable terminal, comprising

- a contactless fingerprint sensor system comprising

  ○ an image recording unit, wherein said image recording unit can be focused to a plurality of focal planes, and wherein said image recording unit is configured to take at least one, in particular grayscale, 2D fingerprint image of one or more fingers located in the detection area of the image recording unit, and
  ○ a distance sensor, in particular a time-of-flight sensor, configured to measure the distance between the image recording unit and one or more fingers located in the detection area of said image recording unit,

  and
- an image processing unit according to the invention, wherein said image processing unit is connected to the image recording unit and to the distance sensor and wherein said image processing unit is configured

  ○ to cause the distance sensor to measure the distance between the image recording unit and one or more fingers located in the detection area of said image recording unit,
  ○ to receive measured distances from the distance sensor,
  ○ to cause the image recording unit to focus to a focal plane corresponding to the distance measured by the distance sensor, and
  ○ to cause the image recording unit to capture at least one, in particular grayscale, 2D fingerprint image, preferably a sequence of 2D fingerprint images, of one or more fingers located in the detection area of the image recording unit.

In order to ensure that captured fingerprint images remain sharp and in focus, regardless of the distance between the hand and the sensor, in a preferred embodiment of the invention the fingerprint sensor arrangement may comprise a liquid lens for adjustment of the focal plane of the image recording unit.

In order to ensure uniform illumination of the hand in the detection area of the image recording unit and thus accurate fingerprint recognition, in a preferred embodiment of the invention the fingerprint sensor arrangement may comprise an illumination unit for uniform illumination of the detection area, in particular a ring-shaped illumination unit positioned around the image recording unit.

Instructions which, when executed by a computer, in particular a computer connected to an image recording unit, cause the computer to carry out the steps of a method according to the invention may be stored on a computer-readable storage medium.

The following detailed description of preferred embodiments of the invention is merely exemplary in nature and is not intended to limit the invention of the application and uses of the invention. The invention will be described with reference to the following figures which are provided by way of explanation only.

Fig. 1 shows a schematic representation of a preferred embodiment of a contactless fingerprint sensor arrangement according to the invention,

Fig. 2 shows a schematic overview of the method steps of a preferred embodiment of a method according to the invention,

Fig. 3a shows an example of a segmented 2D fingertip image with detected fingerprint core,

Fig. 3b the finger pose-corrected 2D fingertip image derived based on the segmented 2D fingertip image in Fig. 3a,

Fig. 4 shows a schematic representation of the parametrized elliptic cross-section used for modelling the 3D shape of the finger, with the y-axis pointing at the observer.

In the following, the invention is described with reference to preferred embodiments of a fingerprint sensor arrangement 100 and a method according to the invention. In the preferred embodiment, the fingerprint sensor arrangement 100 comprises a contactless fingerprint sensor system 50 with an image recording unit 1 and a distance sensor 3. The fingerprint sensor arrangement 100 further comprises an image processing unit 2 which is connected to the image recording unit 1 and the distance sensor 3 and may cause the image recording unit 1 to capture images and the distance sensor 3 to measure distances d. The image processing unit 2 is programmed to carry out a method according to the invention. For this purpose, data 21 may be stored in the image processing unit 2.

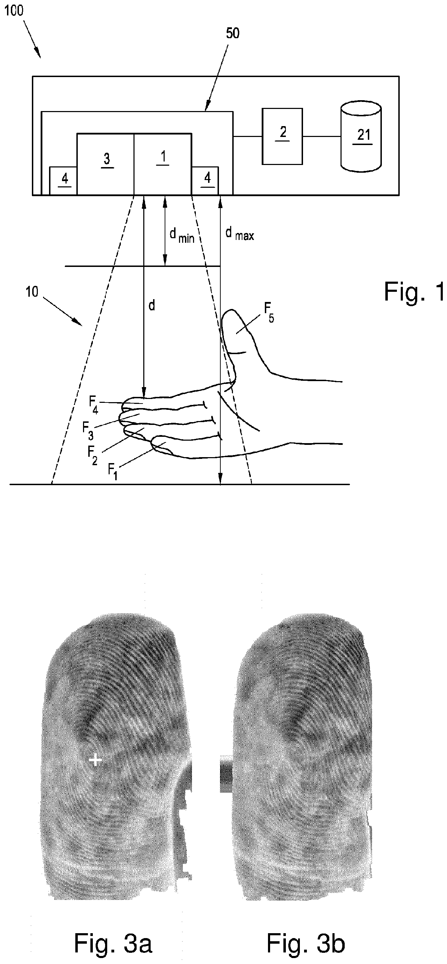

In the preferred embodiment in Fig. 1, a standard two-dimensional (2D) grayscale camera sensor producing 2D grayscale images is used as image recording unit 1 and a time-of-flight (TOF) sensor is used as distance sensor 3. Of course, the image recording unit 1 may also be a color camera, e.g. an RGB color camera.

The TOF sensor determines the distance d to an object based on the two-way traveltime of, e.g. a light pulse. The traveltime of the light pulse from the sensor to the object and back to the sensor is proportional to the distance of the object. The image recording unit 1 and the distance sensor 3 are calibrated relative to each other.

The lens of the image recording unit 1 can be focused to a plurality of focus planes. One possibility to implement such a lens in the image recording unit 1 is a liquid lens which is based on the principle of electrowetting whereby the interface between to liquids changes when a voltage is applied.

In the preferred embodiment shown in Fig. 1, the image recording unit 1 captures images at a high resolution of 3072 x 2048 pixels, which are corrected for lens distortion. Additionally, the image recording unit 1 is calibrated using flat-field correction to account for variations in the sensitivity of individual pixels in the image recording unit 1.

The liquid lens integrated with the TOF sensor allows the image processing unit 2 to adjust the focal plane of the image recording unit 1 based on the distance d of a hand in the detection area 10 of the image recording unit 1 from the TOF sensor. This ensures that the fingerprint images remain sharp and in focus, regardless of the distance d between the hand and the TOF sensor. Due to the small depth of field of the liquid lens, equidistance from the image recording unit 1 to the hand and of all sharp parts of the captured image can be assumed.

The detection area 10 of the image recording unit 1 is limited by the distances $d_{min}$ and $d_{max}$, wherein the distance $d_{max}$ may be chosen such that a desired resolution of the fingerprint of, e.g. 500 DPI, can be ensured and wherein the distance $d_{min}$ may be chosen such that four fingers F may be visible in an image captured by the image recording unit 1.

In the preferred embodiment in Fig. 1, an illumination unit 4 comprising, a number of LEDs, is another component of the contactless fingerprint sensor system 50. The illumination unit 4 provides uniform illumination of the hand, which is advantageous for accurate fingerprint recognition. In the preferred embodiment three stripes of LEDs are positioned around the image recording unit 1, creating a ring of light that surrounds the hand. The illumination unit 4, e.g. the LEDs, may also change color during capturing of fingerprint images to provide feedback to the user, indicating when the hand is outside the acceptable range or when all fingers F have been successfully recorded.

In the preferred embodiment, the contactless fingerprint sensor arrangement 100, more precisely its image recoding unit 1, produces a continuous stream of images, resulting in a video of fingerprint recordings, more specifically a sequence of grayscale 2D fingerprint images A of a number of fingers F in the detection area of the image recording unit 1.

The frame rate may be high enough to enable live identification in just a few seconds, making the system suitable for real-time monitoring and analysis of fingerprint data in applications such as security, access control, and identification. A contactless fingerprint sensor arrangement 100 according to the invention may allow to capture high-quality video in real-time, which makes it especially advantageous for biometric authentication in a variety of settings.

As these 2D fingerprint images A are captured contactless, i.e. in an unconstrained capturing environment with unknown finger pose, they have different characteristics than contact-based ones, and are affected by various external factors such as lighting conditions and viewing angles.

A method according to the invention addresses these issues and corrects the 2D fingerprint images A captured by the contactless fingerprint sensor system 50 in order to ensure accurate and reliable comparison with contact-based fingerprints.

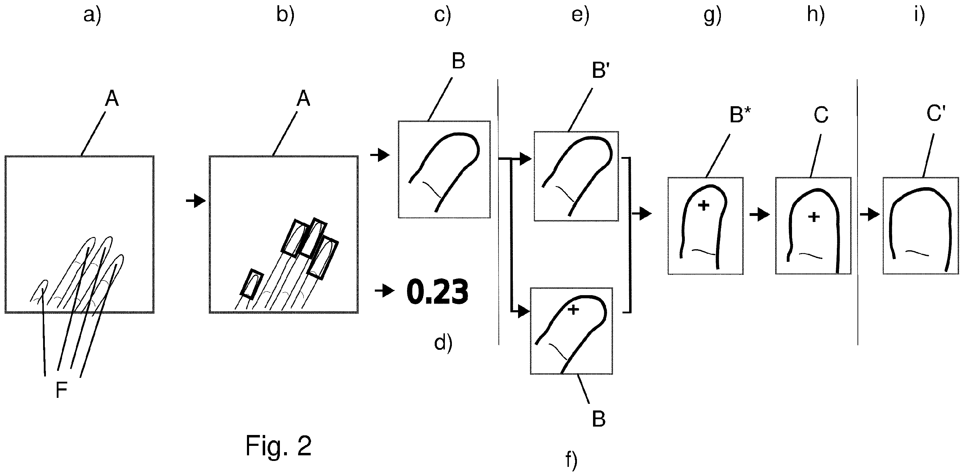

In the preferred embodiment of a method according to the invention in Fig. 2, several processing steps are employed, e.g. during the recording process, to ensure that the captured 2D fingerprint images A are of high quality and suitable for use in biometric authentication. Processing of captured 2D fingerprint images A may, of course, also be carried out separate from the recording process.

A schematic overview of the steps of a method according to the invention is given on the left side of Fig. 2. Advantageously, all processing steps described in the following may be carried out in real-time ensuring immediate provision of finger pose-corrected 2D fingertip image C for further comparison with, e.g., fingerprint databases.

**Fingertip detection and extraction of 2D fingertip images B**

Once at least one 2D fingerprint image A containing the image of at least one finger F has been provided by the image recording unit 1 (step a), the image of the fingertip of said at least one finger F is detected in the 2D fingerprint image A (step b).

In the preferred embodiment in Fig. 1, an object-detection model is used to detect the fingertips in the captured 2D fingerprint image A. This object-detection model allows to quickly and accurately identify the regions of interest, i.e. the regions showing the fingertips, in captured 2D fingerprint images A, which are then used to extract said regions of interest as 2D fingertip images B. In the preferred embodiment, an object-detection model based on a quantized Mobile Net V2 (see Sandler M, Howard A, Zhu M, Zhmoginov A, and Chen LC. MobileNetV2: Inverted Residuals and Linear Bottlenecks. 2019 Mar 21. Doi: 10.48550/arXiv. 1801.04381. arXiv: 1801.04381[cs]. Available from: http://arxiv.org/abs/1801.04381 [Accessed on: 2023 Mar 2]) as backbone using Single Shot MultiBox detection (see https://arxiv.org/abs/1512.02325) is used to detect the fingertips in the captured 2D fingerprint image A. Alternatively, Deep Residual Learning techniques such as ResNet available at https://arxiv.org/abs/1512.03385 (last accessed on 2023 May 4) may be used.

As there are four fingers F captured in the 2D fingerprint image A shown in Fig. 1, there are also four regions of interest, i.e. four fingertips, detected in step b) and four 2D fingertip images B extracted, which are then processed separately.

In the preferred embodiment, the fingertips are detected by the object-detection model within bounding boxes. The bounding boxes around the fingertips are depicted in step b) as rectangles with solid black lines. These bounding boxes may optionally further be used to infer which finger F is which, aiding in the identification process. This identification is based on the detection of the longest finger, which is assumed to be the middle finger. If two more fingers, i.e. bounding boxes, are found to the left of the middle finger, we can infer that the other fingers are the ring and little fingers based on their location.

**Optional enhancement**

Once regions of interest have been extracted as 2D fingertip images B, they may be subjected to several enhancement operations to improve their quality, which is carried out in the preferred embodiment. Such enhancement operations are, however, optional and a method according to the invention also provides adequate finger pose-corrected 2D fingertip images C without these optional additional steps.

First, the 2D fingertip images B may be rotated upright and resized to match the FBI standard of 500 DPI (see Wing BJ. Data Format for the Interchange of Fingerprint, Facial and Other Biometric Information ANSI/NIST-ITL 1-2011 NIST Special Publication 500-290 Edition 2. Report Number: NIST SP 500-290e2. National Institute of Standards and Technology, 2013 Aug. NIST SP 500-290e2. Doi: 10.6028/ NIST.SP.500-290e2. Available from: https://nvlpubs.nist. gov/nistpubs/SpecialPublications/NIST.SP.500-290e2.pdf [Accessed on: 2023 Mar 2]).

Such a resizing may be beneficial to ensure that the 2D fingertip images B contain sufficient detail for accurate identification. Fingerprint template comparison algorithms are sensitive to the DPI resolution of the images, and deviations from the standard resolution can significantly impact the accuracy of the template comparison process. By adhering to the FBI standard, it may advantageously be ensured that the images are of sufficient resolution to capture the necessary level of detail for accurate identification.

Next, the image enhancement algorithm from Kauba et al. may optionally be applied (see Kauba C, S"ollinger D, Kirchgasser S, Weissenfeld A, Fern andez Dom'mguez G, Strobl B, and Uhl A. Towards Using Police Officers' Business Smart phones for Contactless Fingerprint Acquisition and Enabling Fingerprint Comparison against Contact-Based Datasets. Sensors. 2021; 21. Doi: 10.3390/s21072248. Available from: https://www.mdpi.com/1424-8220/21/7/2248). It consists of a gray-value inversion, a sharpness improving and noise removing bilateral filter and a Contrast Limited Adaptive Histogram Equalization (CLAHE) filter (see Zuiderveld K. Contrast Limited Adaptive Histogram Equalization. Book Title: Graphics Gems. Elsevier, 1994 :474-85. Doi: 10.1016/B978-0-12-336156-1.50061-6. Available from: https://linkinghub.elsevier.com/retrieve/pii/B9780123361561500616 (Accessed on: 2023 Mar 2*]*) with a clip limit of, e.g., 4 and a tile grid size of, e.g., 15 by 15 pixels. The bilateral filter uses a pixel neighborhood diameter of 2, a filter sigma in the gray level space of 4 and a filter sigma in the coordinate space of 1. In case such enhancement methods are applied, both the enhanced 2D fingertip image and the non-enhanced 2D fingertip image B may be passed on to the next step of the method according to the invention.

In addition to these steps, a sharpness score may be calculated for each 2D fingerprint image A during pre-processing. Such as sharpness score may be based on the Canny edge detection algorithm (see Canny J. A Computational Approach To Edge Detection. Pattern Analysis and Machine Intelligence, IEEE Transactions on. 1986 Dec 1; PAMI-8:679-98. Doi: 10.1109/TPAMI. 1986.4767851*)* which may be applied to a ring-shaped area in the center of the finger. The number of edge pixels is counted and normalized to produce the final sharpness score. Such a sharpness score may help to ensure that only the sharpest and most detailed 2D fingerprint images A are used for identification. In an optional template comparison process following later on, the score information of the finger may be used to rank different recordings of the same finger F. This may be used to select only the top five sharpest images for each finger F and thus reduce computational time and resources in template comparison.

### Segmentation

Once, a 2D fingertip image B has been provided, the next step of a method according to the invention is segmentation (step e) in Fig. 2), which involves separating the fingertip from the background of the captured 2D fingertip image B. In the preferred embodiment, segmentation of the extracted 2D fingertip image B is achieved using a neural network based on the U-Net architecture (see Ronneberger O, Fischer P, and Brox T. U-Net: Convolutional Networks for Biomedical Image Segmentation. Medical Image Computing and Computer-Assisted Intervention - MICCAI 2015. Ed. By Navab N, Hornegger J, Wells WM, and Frangi AF. Lecture Notes in Computer Science. Cham: Springer International Publishing, 2015:234-41. Doi: 10. 1007/978-3-319-24574-4_28*)* which accurately identifies the regions of interest in the image.

In the preferred embodiment, the U-Net architecture is modified to ensure a more stable training and an improved performance. These modifications consist of the addition of Batch Normalization (see https://arxiv.org/abs/1502.03167), a change of the activation function from ReLU to LeakyReLU in the upsampling part of the model and the inclusion of a pre-trained model, e.g a MobileNetV2, in the downsampling part of the model. The objective function for the model is the cross-entropy loss. The training of the model in the preferred embodiment should be based on a large corpus of annotated finger data, which can be split into a training and validation set. The training of the model is conducted using stochastic gradient descend to adapt the model weights using the training split of the dataset. Training should be continued over multiple epochs, until an increase in loss on the validation set can be observed.

Apart from that, the finger contour of the fingertip is provided by the segmentation.

### Fingerprint core detection

In step f) of the preferred embodiment in Fig. 2, the fingerprint core of the fingertip is localized in the extracted 2D fingertip image B. The fingerprint core in Fig. 2 is marked by a cross.

One approach to localize the fingerprint core of the fingertip in the segmented 2D fingertip image B' is to exploit ridge orientation (see, e.g., Johal NK and Kamra A. A Novel Method for Fingerprint Core Point Detection. 2011; 2*;* Julasayvake A and Choomchuay S. An algorithm for fingerprint core point detection. 2007 9th International Symposium on Signal Processing and Its Applications. 2007 9th International Symposium on Signal Processing and Its Applications. 2007 Feb :1-4. doi: 10. 1109/ISSPA.2007.4555384*)*. In order to do so, the ridges and/or valleys of the fingerprint have to be identified first. Nevertheless, this approach to localize the fingerprint core can also be applied in a method according to the invention achieving adequate results, i.e. adequately finger pose-corrected 2D fingertip images C.

In the preferred embodiment of the invention shown in Fig. 2, a neural network of U-Net architecture is used to directly localize the fingerprint core of the fingertip in the extracted fingertip image B. Additionally, such a neural network of U-Net architecture is better suited for images with low depth of field, where some parts of the image may not be in sharp focus. Details of the neural network of U-Net architecture have already been given above and also apply for the neural network used in step f), with the exception of the trainings process.

In the preferred embodiment the U-Net architecture for fingerprint core localization is trained on a large corpus of annotated fingerprint core positions. This can be accomplished using a semi-automatic annotation process, where ridge orientation-based fingerprint core localization tools are used to create training data, which his then manually corrected.

**Horizontal rotation**

Once the fingertip is segmented in the extracted 2D fingertip image B and a segmented 2D fingertip image B' is provided, existing enhancement processes in the field of biometrics usually fit a box around the finger and correct for the rotation of the box to ensure that the center line of the finger is vertical (see Priesnitz J, Huesmann R, Rathgeb C, Buchmann N, and Busch C. Mobile Contactless Fingerprint Recognition: Implementation, Performance and Usability Aspects. Sensors. 2022 Jan; 22. Number: 3 Publisher: Multidisciplinary Digital Publishing Institute: 792. doi: 10.3390/s22030792. Available from: https://www.mdpi.eom/1424-8220/22/3/792 [Accessed on: 2023 Mar 30]). However, this approach is sensitive to outliers in the segmentation, which can lead to inaccurate results.

Thus, in the preferred embodiment of a method according to the invention in Fig. 2, for horizontally rotating the segmented 2D fingertip image B' (step g) in Fig. 2), the slope of the center line of the detected finger contour is determined by fitting a linear function over the midpoints between a number of points on the finger contour of the fingertip located at the same y-axis coordinate of a Cartesian coordinate system with its origin in the lower left corner of the segmented 2D fingertip image B'. After that, the segmented 2D fingertip image B' is rotated based on the determined slope of the center line in order to ensure that the center line of the image of the fingertip is vertical in said segmented 2D fingertip image B'. This method reduces the effect of outliers in the contour detection and allows for accurate rotation of the segmented 2D fingertip image B', improving finger alignment in comparison to existing methods.

In the preferred embodiment of the invention presented in Fig. 2, fingerprint core detection in the extracted 2D fingertip image B (step f) is carried out first, followed by horizontally rotating the segmented 2D fingertip image B' (step g). Indeed, however, fingerprint core detection and horizontal rotation may be carried out independently, as fingerprint core detection is not necessary for horizontal rotation of the segmented 2D fingertip image B'. This means, that the horizontal rotation of the segmented 2D fingertip image B' can be carried out first and the fingerprint core position may be rotated horizontally once it is localized in the extracted 2D fingertip image B. It is, however, also possible to first rotate the segmented 2D fingertip image B' horizontally and then detect the fingerprint core in the horizontally rotated fingertip image B*.

**Lateral rotation**

Once the fingerprint core has been localized, a predefined finger shape is used to determine the offset of the fingerprint core of the fingerprint in the horizontally rotated 2D fingertip image B* from the center of said predefined finger shape.

In the preferred embodiment of a method according to the invention, it is assumed that the fingertip has an elliptic cross-section, i.e., the predefined finger shape is an ellipsoid with an elliptic cross-section. In the preferred embodiment, a fingerprint model with an elliptical cross-section and an ellipse with a major-minor axis ratio a/b of 1.2 for lateral rotation correction is used (see Tan H and Kumar A. Towards More Accurate Contactless Fingerprint Minutiae Extraction and Pose-Invariant Matching. IEEE Transactions on Information Forensics and Security. 2020; 15. Conference Name: IEEE Transactions on Information Forensics and Security:3924-37. doi: 10. 1109/TIFS.2020.3001732).

However, choosing an elliptic cross-section as predefined finger shape is not essential and a method according to the invention can also be carried out with any other suitable fingerprint shape. Of course, a major-minor axis ratio a/b other than 1.2 may also be chosen for carrying out a method according to the invention.

To calculate the finger's offset, i.e. the offset of the fingerprint core of the fingerprint, from the center of the predefined finger shape, the detected fingerprint core is used as a reference point. The offset of the fingerprint core position $P_c'$ from the left finger edge $P_l'$ visible in the rotated image to the right finger edge $P_r'$ visible in the rotated image is used to implicitly define the rotation angle $\alpha$, i.e. the negative viewing angle, as follows (see also Tan H and Kumar A. Towards More Accurate Contactless Fingerprint Minutiae Extraction and Pose-Invariant Matching. IEEE Transactions on Information Forensics and Security. 2020; 15. Conference Name: IEEE Transactions on Information Forensics and Security:3924-37. doi: 10.1109/TIFS.2020.3001732):

$$\eta := \arctan\left(\frac{\sin\alpha}{1.2\cos\alpha}\right) \qquad (1)$$

$$R := \frac{\overline{P'_l P'_c}}{\overline{P'_c P'_r}} = \frac{1 + \sin(\eta)}{1 - \sin(\eta)} \tag{2}$$

Equation (2) can be solved analytically, and for a choice of major-to-minor axis ratio a/b of, e.g., 1.2 one finds:

$$A := (R - 1)^2 \tag{3}$$

$$B := \left(R^2 - 2R + 1\right) \tag{4}$$

$$C := \frac{-10\sqrt{R\left(9R^2 + 7R + 9\right)}A + B\left(9R^2 + 32R + 9\right)}{9AB} \tag{5}$$

$$\alpha = 2\,\mathrm{sign}(R - 1)\,\mathrm{atan}\,\sqrt{C}, \tag{6}$$

which allows to calculate an estimated rotation angle $\alpha$ for lateral rotation of the horizontally rotated 2D fingertip image B* based on the determined offset of the fingerprint core.

After finding the rotation angle $\alpha$, the ellipsoidal model with an elliptic cross-section of the fingertip with an exemplary major-to-minor axis ration a/b of 1.2, chosen before, is used again. In order to model the fingertip in the horizontally rotated 2D fingertip image B* based on the predefined finger shape and the width of the detected finger contour, it is assumed that the fingertip is composed of a number of slices whose height of one pixel extends along the y-axis of a Cartesian coordinate system with its origin in the lower left corner of the horizontally rotated 2D fingertip image B* and whose width extends along the x-axis of said coordinate system.

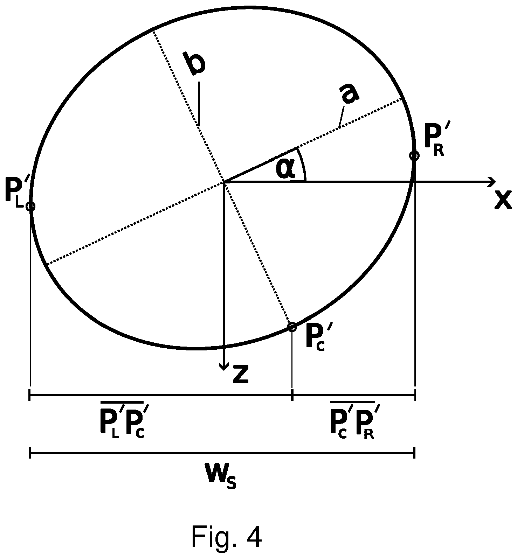

In the preferred embodiment described here, each pixel in the horizontally rotated 2D fingertip image B* on the y-axis of the horizontally rotated 2D fingertip image B* defines one slice. The elliptic cross-section of the predefined 3D finger shape, i.e. the predefined 3D finger model is described by the width of the slice $w_s$, which is determined using the measured contour width of the detected finger contour. Such an elliptic cross-section with slice width $w_s$ is depicted in Fig. 4, where the y-axis of the rotated 2D finger image B* points at the observer in Fig. 4 and the z axis is the axis pointing orthogonally to the image plane. The leftmost edge of the fingertip in the horizontally rotated 2D finger image B* corresponds to the point $P_L$' and the rightmost point of the fingertip corresponds to point $P_R$' of figure 4. Also, the position of the core corresponds with point $P_C$' of Fig. 4. Each pixel in the horizontally rotated 2D fingertip image B* is mapped to its corresponding 3D point on the parameterized elliptic cross-section.

Using such a model allows to rotate the horizontally rotated 2D fingertip image B* (step h) in Fig. 2) to the correct orientation while taking into account the finger's estimated 3D shape, in order to receive a finger pose-corrected 2D fingertip image C. The resulting finger pose-corrected 2D fingertip image C is a corrected and aligned image where the fingerprint core sits in the center. This finger pose-corrected 2D fingertip image C can then be used by following processing steps to improve template comparison features, significantly improving on previously existing methods.

Optionally, after lateral rotation correction, any regions that would not have been visible to a front-facing camera may be removed from the finger pose-corrected 2D fingertip image C.

Fig. 3a provides an example of a segmented 2D fingertip image B of a ring finger that has been enhanced using Kauba's enhancement technique described above. In Fig. 3a the detected fingerprint core is highlighted using a white cross. The position of the fingerprint core, as well as the segmentation mask, are utilized to determine the viewing angle of the finger. Additionally, the segmentation mask is used to generate a 3D model of the finger shape, based on elliptic cross-sections with a major-to-minor axis ratio of 1.2. The final output of the preferred embodiment of a method according to the invention described above is illustrated in Fig. 3b.

As discussed before, finger pose correction in 2D fingerprint images A captured by a contactless fingerprint sensor system is a critical component in ensuring the accuracy and reliability of biometric authentication. A method according to the invention involves, simply speaking, a series of rotations that correct the pose of the captured images of the individual fingertips to improve their 3D alignment for template comparison, allowing accurate biometric authentication based on the finger pose-corrected 2D fingertip image C provided.

Optionally, after 2D fingerprint images A have been captured and processed as described above, a series of post-processing steps may be applied to further improve their quality and prepare them for use in biometric authentication. These steps may include unwarping, and possible future additional image enhancements and are depicted on the right side of Fig. 2.

In such post-processing steps for contactless fingerprints, one desired step may be unwarping the acquired finger pose-corrected 2D fingertip image C. Unlike contact-based fingerprint sensors, where the finger is in direct contact with the sensor surface, contactless sensors capture the fingerprint image without physical contact. As a result, contactless images can be distorted due to the curvature of the fingertip.

Unwarping may thus be beneficial to correct for this and to align the finger pose-corrected 2D fingertip image C to a standard reference frame, which enables accurate template comparison with contact-based fingerprints. To correct for the distortion caused by the nonplanar surface of the fingertip in contactless fingerprint images, three types of unwarping may be applied: circular, elliptic, and bidirectional, which are described in more detail in Sollinger D and Uhl A. Optimizing contactless to contact-based fingerprint comparison using simple parametric warping models. 2021 IEEE International Joint Conference on Biometrics (IJCB). 2021 IEEE International Joint Conference on Biometrics (IJCB). Shenzhen, China: IEEE, 2021 Aug 4:1-7. doi: 10. 1109/IJCB52358.2021.9484364. Available from: https://ieeexplore.ieee. org/document/9484364/ [Accessed on: 2021 Nov 25].

The circular method assumes the finger has a cylindrical shape, while the elliptic method models the finger cross-section as an ellipse. The bidirectional method takes into account the curvature of the fingertip. This is accomplished by combining the circular unwarping with another circular unwarping for the rounded tip region of the finger.

**Example Implementation**

A method according to the invention operates on a single 2D fingerprint image A captured by, e.g. a contactless fingerprint sensor system 50 as described above. This 2D fingerprint image A is processed by deep learning networks to perform classic rotation in both the horizontal and lateral directions, resulting in an accurate and corrected finger pose-corrected 2D fingertip image C. Further enhancement steps like unwarping may also be applied.

A method according to the invention can be implemented in both mobile and embedded settings. In a mobile setting, it can be used for authenticating people on the streets, allowing law enforcement agencies to identify individuals on the go. In an embedded setting, it can be used to enroll users in a stationary setting, such as at a government office or a bank. This flexibility in implementation allows for the technology to be used in a variety of scenarios and for different purposes, making it a versatile and valuable tool for identity authentication and verification. The use of contactless fingerprint sensors and a method according to the invention can significantly improve the speed and accuracy of identification, thereby improving public safety and security.

**Claims**

1. Method for finger pose correction in 2D fingerprint images (A) captured in an unconstrained capturing environment with unknown finger pose, in particular captured by a contactless fingerprint sensor system (50),
comprising the following steps:

   - providing at least one, in particular grayscale, 2D fingerprint image (A), wherein said 2D fingerprint image (A) contains the image of at least one finger (F),
   - detecting the image of the fingertip of the at least one finger (F) in the 2D fingerprint image (A),
   - extracting the detected fingertip from the 2D fingerprint image (A) in the form of a 2D fingertip image (B),
   - segmenting the extracted 2D fingertip image (B) in order to separate the fingertip from the background, wherein the finger contour of the fingertip is provided by the segmentation,
   - localizing the fingerprint core of the fingertip in the extracted 2D fingertip image (B) and horizontally rotating the segmented 2D fingertip image (B') and the localized fingerprint core position based on the detected finger contour and/or
   horizontally rotating the segmented 2D fingertip image (B') based on the detected finger contour and localizing the fingerprint core of the fingertip in the horizontally rotated 2D fingertip image (B*),
   - determining the offset of the fingerprint core of the fingertip in the horizontally rotated 2D fingertip image (B*) relative to the finger contour provided by the segmentation,
   - determining the rotation angle $\alpha$ for lateral rotation of the horizontally rotated 2D fingertip image (B*) based on the determined offset of the fingerprint core and a predefined 3D finger shape,
   - modelling the fingertip in the horizontally rotated 2D fingertip image (B*) based on the predefined 3D finger shape and the width of the detected finger contour and applying the determined rotation angle $\alpha$ for lateral rotation correction in order to receive a finger pose-corrected 2D fingertip image (C).

2. Method according to claim 1, wherein for segmenting the extracted 2D fingertip image (B) a neural network, in particular a neural network of U-Net architecture, is used.

3. Method according to any of claims 1 or 2, wherein for horizontally rotating the segmented 2D fingertip image (B')

- the slope of the center line of the detected finger contour is determined by fitting a linear function over the midpoints between a number of points on the finger contour of the fingertip located at the same height, in particular at the same y-axis coordinate of a Cartesian coordinate system with its origin in the lower left corner of the segmented 2D fingertip image (B'), in the segmented 2D fingertip image (B') and
- the segmented 2D fingertip image (B') is rotated based on the determined slope of the center line in order to ensure that the center line of the image of the fingertip is vertical in said segmented 2D fingertip image (B').

4. Method according to any preceding claim, wherein localizing the fingerprint core of the finger in the extracted 2D fingertip image (B) is carried out

- based on the ridges and valleys, in particular the orientation of the ridges, of the fingertip and/or
- by a neural network, in particular a neural network of U-Net architecture.

5. Method according to any preceding claim, wherein the predefined 3D finger shape is an ellipsoid with an elliptic cross-section.

6. Method according to any preceding claim, wherein for determining the rotation angle for lateral rotation

- an elliptic finger cross-section is assumed and the offset of the fingerprint core of the finger from the center of the horizontally rotated 2D fingertip image (B*) is determined,
- the distance $P_l'P_c'$ from the fingerprint core to the left edge of the finger and the distance $P_c'P_r'$ from the fingerprint core to the right edge of the finger in the horizontally rotated 2D fingerprint image (B*) are calculated and
- the rotation angle $\alpha$ is determined based on the following equations

$$\eta = arctan\left(\frac{b \cdot \sin \alpha}{a \cdot \cos \alpha}\right) \qquad (I)$$

$$R := \frac{\overline{P_l'P_c'}}{\overline{P_c'P_r'}} = \frac{1 + \sin(\eta)}{1 - \sin(\eta)} \qquad (II)$$

wherein a is the major axis of the elliptic finger cross section and b is the minor axis of the elliptic finger cross section.

7. Method according to any of claims 5 or 6, wherein the major-to-minor axis ratio of the elliptic cross-section a/b is 1.2.

8. Method according to any of claims 5 to 7, wherein for modelling the fingertip in the horizontally rotated 2D fingertip image (B*) the estimated 3D shape of the finger (F) is taken into account by

- subdividing the image of the fingertip in the horizontally rotated 2D fingertip image (B*) into a number of slices parallel to the x-axis of a Cartesian coordinate system with its origin in the lower left corner of the horizontally rotated 2D fingertip image (B*),

- wherein the distance between the outermost pixels of the horizontally rotated fingertip contour on the x-axis of the Cartesian coordinate system defines the width $w_s$ of each slice, and
- in particular wherein the number of pixels on the y-axis of the Cartesian coordinate system is proportional to and/or defines the number of slices,

- determining the parametrization of an elliptic cross-section for each slice based on the major-to-minor axis ratio a/b of the predefined 3D finger shape model and the width $w_s$ of said slice,
- determining for each parametrized elliptic cross-section the width of a corresponding laterally rotated elliptic cross-section based on the width of said parametrized elliptic cross-section and the rotation angle $\alpha$, and determining for each pixel in a given slice a corresponding laterally rotated pixel position based on its corresponding position in the predefined 3D finger shape model and the rotation angle $\alpha$.

9. Method according to any preceding claim, wherein the finger pose-corrected 2D fingertip image (C) is unwarped using a circular, elliptic, and/or bidirectional unwarping method.

10. Image processing unit (2) for finger pose correction in 2D fingerprint images (A) captured in an unconstrained capturing environment with unknown finger pose, in particular captured by a contactless fingerprint sensor system (50),

- wherein the image processing unit (1) is configured to receive at least one, in particular grayscale, 2D fingerprint image (A), in particular from a contactless fingerprint sensor system (50) and/or an image recording unit (1), wherein said 2D fingerprint image (A) contains the image of at least one finger (F),
- wherein in particular the image processing unit (1) is connectable with the contactless fingerprint sensor system (50), in particular with an image recording unit (1) of the contactless fingerprint sensor system (50), and
- wherein the image processing unit (1) is programmed to

   ∘ detect the image of the fingertip of the at least one finger (F) in the 2D fingerprint image (A),
   ∘ extract the detected image of the fingertip from the 2D fingerprint image (A) in the form of a 2D fingertip image (B),
   ∘ segment the extracted 2D fingertip image (B) in order to separate the fingertip from the background and to provide the finger contour of the fingertip in said extracted 2D fingertip image (B),
   ∘ localize the fingerprint core of the fingertip in the extracted 2D fingertip image (B) and horizontally rotate the segmented 2D fingertip image (B') and the localized fingerprint core position based on the detected finger contour and/or horizontally rotate the segmented 2D fingertip image (B') based on the detected finger contour and localize the fingerprint core of the fingertip in the horizontally rotated 2D fingertip image (B*),
   ∘ determine the offset of the fingerprint core of the fingertip in the horizontally rotated 2D fingertip image (B*) relative to the finger contour provided by the segmentation,
   ∘ determine the rotation angle $\alpha$ for lateral rotation of the horizontally rotated 2D fingertip image (B*) based on the determined offset of the fingerprint core and a predefined 3D finger shape, and
   ∘ model the fingertip in the horizontally rotated 2D fingertip image (B*) based on the predefined 3D finger shape and the width of the detected finger contour and apply the determined rotation angle $\alpha$ for lateral rotation correction, such providing a finger pose-corrected 2D fingertip image (C).

11. Image processing unit (2) according to claim 10, **characterized in that** the image processing unit (2) is programmed to carry out the method of any of claims 2 to 9.

12. Fingerprint sensor arrangement (100) for finger pose correction in 2D fingerprint images (A) captured in an unconstrained capturing environment with unknown finger pose, designed in particular as a mobile portable terminal, comprising

   - a contactless fingerprint sensor system (50) comprising

      ∘ an image recording unit (1), wherein said image recording unit (1) can be focused to a plurality of focal planes, and wherein said image recording unit (1) is configured to take at least one, in particular grayscale, 2D fingerprint image (A) of one or more fingers (F) located in the detection area (10) of the image recording unit (1), and
      ∘ a distance sensor (3), in particular a time-of-flight sensor, configured to measure the distance between the image recording unit (1) and one or more fingers (F) located in the detection area (10) of said image recording unit (1),

   and
   - an image processing unit (2) according to claim 10 or 11, wherein said image processing unit (2) is connected to the image recording unit (1) and to the distance sensor (3) and wherein said image processing unit (2) is configured

      ∘ to cause the distance sensor (3) to measure the distance (d) between the image recording unit (1) and one or more fingers located in the detection area (10) of said image recording unit (1),
      ∘ to receive measured distances (d) from the distance sensor (3),
      ∘ to cause the image recording unit (1) to focus to a focal plane corresponding to the distance (d) measured by the distance sensor (3), and

◦ to cause the image recording unit (1) to capture at least one, in particular grayscale, 2D fingerprint image, preferably a sequence of 2D fingerprint images, of one or more fingers located in the detection area (10) of the image recording unit (1).

13. Fingerprint sensor arrangement (100) according to claim 12, **characterized in that**

- the image recording unit (1) comprises a liquid lens for adjustment of the focal plane of the image recording unit (1) and/or
- the contactless fingerprint sensor system (50) comprises an illumination unit (4) for uniform illumination of the detection area (10), in particular a ring-shaped illumination unit positioned around the image recording unit (1).

14. Computer-readable storage medium comprising instructions which, when executed by a computer, in particular a computer connected to an image recording unit (1), cause the computer to carry out the steps of the method of any of claims 1 to 9.

100

50

4 | 3 | 1 | 4 | 2 | 21

$d_{min}$   $d_{max}$

10

d

$F_5$

$F_4$
$F_3$
$F_2$
$F_1$

Fig. 1

Fig. 3a          Fig. 3b

Fig. 2

Fig. 4

Europäisches
Patentamt

European
Patent Office

Office européen
des brevets

# EUROPEAN SEARCH REPORT

**Application Number**

EP 23 17 5102

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TAN HANZHUO ET AL: "Towards More Accurate Contactless Fingerprint Minutiae Extraction and Pose-Invariant Matching", IEEE TRANSACTIONS ON INFORMATION FORENSICS AND SECURITY, IEEE, USA, vol. 15, 11 June 2020 (2020-06-11), pages 3924-3937, XP011798980, ISSN: 1556-6013, DOI: 10.1109/TIFS.2020.3001732 [retrieved on 2020-07-17] | 1,5-8, 10,14 | INV. G06V40/12 G06V10/24 G06V40/13 |
| Y | * algorithm 2; page 3928; figures 1,6,4,19 * * equation (5); page 3927 * | 1-4,9-14 | |
| Y | JANNIS PRIESNITZ ET AL: "Mobile Touchless Fingerprint Recognition: Implementation, Performance and Usability Aspects", ARXIV.ORG, CORNELL UNIVERSITY LIBRARY, 201 OLIN LIBRARY CORNELL UNIVERSITY ITHACA, NY 14853, 4 March 2021 (2021-03-04), XP081905906, * figure 3 * | 1,3,10, 14 | |
| Y | GROSZ STEVEN A ET AL: "C2CL: Contact to Contactless Fingerprint Matching", IEEE TRANSACTIONS ON INFORMATION FORENSICS AND SECURITY, IEEE, USA, vol. 17, 10 December 2021 (2021-12-10), pages 196-210, XP011897737, ISSN: 1556-6013, DOI: 10.1109/TIFS.2021.3134867 [retrieved on 2022-01-13] * A. Preprocessing 1) Segmentation; page 201, left-hand column * * figure 6 * | 2,9,11 | |

**TECHNICAL FIELDS SEARCHED (IPC)**

G06V

-/--

The present search report has been drawn up for all claims

| Place of search | Date of completion of the search | Examiner |
|---|---|---|
| The Hague | 7 September 2023 | Meier, Ueli |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

| | Europäisches Patentamt European Patent Office Office européen des brevets | **EUROPEAN SEARCH REPORT** | Application Number EP 23 17 5102 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Johal Navrit Kaur Amit ET AL: "A Novel Method for Fingerprint Core Point Detection", , 30 April 2011 (2011-04-30), XP093079689, Retrieved from the Internet: URL:https://citeseerx.ist.psu.edu/document ?repid=rep1&type=pdf&doi=5074cfc647dd1dc66 164b7acd36addf20979a9f6 [retrieved on 2023-09-07] * 4. Proposed Algorihtm; page 4 – page 5 * ----- | 4 | |
| Y | WO 2022/233964 A1 (IDLOOP GMBH [DE]) 10 November 2022 (2022-11-10) * abstract * * page 3, line 15 – line 21 * ----- | 12,13 | |
| | | | **TECHNICAL FIELDS SEARCHED (IPC)** |

The present search report has been drawn up for all claims

| Place of search | Date of completion of the search | Examiner |
|---|---|---|
| The Hague | 7 September 2023 | Meier, Ueli |

EPO FORM 1503 03.82 (P04C01)

## ANNEX TO THE EUROPEAN SEARCH REPORT
## ON EUROPEAN PATENT APPLICATION NO.

EP 23 17 5102

This annex lists the patent family members relating to the patent documents cited in the above-mentioned European search report.
The members are as contained in the European Patent Office EDP file on
The European Patent Office is in no way liable for these particulars which are merely given for the purpose of information.

07-09-2023

| Patent document cited in search report | Publication date | Patent family member(s) | Publication date |
|---|---|---|---|
| WO 2022233964 A1 | 10-11-2022 | DE 102021111422 A1<br>WO 2022233964 A1 | 10-11-2022<br>10-11-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3663976 B1

- EP 3663981 A1

**Non-patent literature cited in the description**

- **SANDLER M** ; **HOWARD A** ; **ZHU M** ; **ZHMOGINOV A** ; **CHEN LC**. MobileNetV2: Inverted Residuals and Linear Bottlenecks. *arXiv: 1801.04381*, 21 March 2019, http://arxiv.org/abs/1801.04381

- Deep Residual Learning techniques. *ResNet*, 04 May 2023, https://arxiv.org/abs/1512.03385

- Data Format for the Interchange of Fingerprint, Facial and Other Biometric Information ANSI/NIST-ITL 1-2011 NIST Special Publication 500-290. **WING BJ**. Report Number: NIST SP 500-290e2. National Institute of Standards and Technology, August 2013

- **KAUBA C** ; **S''OLLINGER D** ; **KIRCHGASSER S** ; **WEISSENFELD A** ; **FERN ANDEZ DOM'MGUEZ G** ; **STROBL B** ; **UHL A**. Towards Using Police Officers' Business Smart phones for Contactless Fingerprint Acquisition and Enabling Fingerprint Comparison against Contact-Based Datasets. *Sensors*, 2021, 21, https://www.mdpi.com/1424-8220/21/7/2248

- Contrast Limited Adaptive Histogram Equalization. **ZUIDERVELD K**. Graphics Gems. Elsevier, 1994, 474-85

- **CANNY J**. A Computational Approach To Edge Detection. Pattern Analysis and Machine Intelligence. *IEEE Transactions on*, 01 December 1986

- U-Net: Convolutional Networks for Biomedical Image Segmentation. Medical Image Computing and Computer-Assisted Intervention - MICCAI 2015. **RONNEBERGER O** ; **FISCHER P** ; **BROX T**. Lecture Notes in Computer Science. Springer International Publishing, 2015, 234-41

- **JOHAL NK** ; **KAMRA A**. *A Novel Method for Fingerprint Core Point Detection*, 2011, 2

- **JULASAYVAKE A** ; **CHOOMCHUAY S**. An algorithm for fingerprint core point detection. *2007 9th International Symposium on Signal Processing and Its Applications. 2007 9th International Symposium on Signal Processing and Its Applications*, February 2007, 1-4

- Mobile Contactless Fingerprint Recognition: Implementation, Performance and Usability Aspects. **PRIESNITZ J** ; **HUESMANN R** ; **RATHGEB C** ; **BUCHMANN N** ; **BUSCH C**. Sensors. Multidisciplinary Digital Publishing Institute, January 2022, vol. 22, 792

- **TAN H** ; **KUMAR A**. Towards More Accurate Contactless Fingerprint Minutiae Extraction and Pose-Invariant Matching. IEEE Transactions on Information Forensics and Security. *IEEE Transactions on Information Forensics and Security*, 2020, vol. 15, 3924-37

- Optimizing contactless to contact-based fingerprint comparison using simple parametric warping models. **SOLLINGER D** ; **UHL A**. 2021 IEEE International Joint Conference on Biometrics (IJCB). 2021 IEEE International Joint Conference on Biometrics (IJCB). Shenzhen, China. IEEE, 04 August 2021, 1-7